# EUROPEAN PATENT SPECIFICATION

(11) **EP 1 871 086 B1**
(45) Date of publication and mention of the grant of the patent: **07.09.2011**
(21) Application number: 07110854.2
(22) Date of filing: 22.06.2007
(51) Int. Cl.: H04N 1/32

(54) **Method and apparatus for image capturing and system using the same**
Verfahren und Vorrichtung zur Bilderfassung und System damit
Procédé et appareil de capture d'images et système les utilisant

(30) Priority: 22.06.2006 JP 2006172251; 04.06.2007 JP 2007148110
(43) Date of publication of application: 26.12.2007
(73) Proprietor: Ricoh Company, Ltd., Tokyo 143-8555 (JP)
(72) Inventor: Uchiyama, Hiroaki, Tokyo 143-8555 (JP)
(74) Representative: Schwabe - Sandmair - Marx

(56) References cited:
- EP-A2- 0 833 494
- WO-A-2006/028383
- US-A1- 2001 024 236
- US-A1- 2002 191 087
- US-A1- 2004 201 702

## Description

### BACKGROUND

### Field of the Invention

This patent application relates to image capturing apparatuses, and more specifically to an image capturing apparatus capable of transmitting image data via a network.

### Background Art

US 2002/0191087 A1 describes an image recording apparatus (digital camera) recording not only an image but also location information of the place where the image is obtained. The location information may be obtained from radio waves output from a station at a predetermined position. The location information may be generated using a GPS receiver. In addition, a position-home-page conversion table may be employed. A display shows a map which indicates the actual position of the image recording apparatus.

In recent years, image capturing apparatuses, such as digital camera, have been provided with various functions. In particular, in the field of portable image capturing apparatuses, such as compact digital cameras, products having a wireless communication function, such as wireless LAN (local area network) or Bluetooth (registered trademark), are now available on the market. Meanwhile, public wireless networks are remarkably becoming prevalent. For example, for a public wireless network, the access points are now set up in various places such as restaurants, station platforms, etc.

Using such an image capturing apparatus and a public wireless network, a user can capture an object image and transmit the captured image to a desired destination via an access point of the public wireless network.

For example, a conventional image capturing apparatus transmits image data as an attachment file of an electronic mail via a network. For the transmission, the image capturing apparatus controls the execution of mail sending processing corresponding to radio wave intensity or status. Specifically, when the radio wave intensity is high, the image capturing apparatus collectively sends multiple mails, while, when the radio wave intensity is low, the image capturing apparatus sends a mail one by one.

Another conventional image capturing apparatus transmits image data via a wireless communication network of PHS (personal handyphone system). Specifically, when the remaining capacity of an internal memory becomes low, the image capturing apparatus transmits the image data, stored in the memory, to an external server. Then the image capturing apparatus deletes the image data in the memory to secure the storage capacity of the memory.

As described above, a conventional image capturing apparatus transmits image data via a wireless communication network in a mobile communication environment. Typically, a conventional image capturing apparatus may activate a wireless communication circuit to search an access point of a wireless communication network using a handshake protocol. At this time, a conventional image capturing apparatus may be in a standby mode to receive a beacon packet or may periodically send a probe request to an access point.

However, a wireless communication circuit capable of transmitting image data at high speed consumes a relatively large amount of electrical power compared to a Bluetooth (registered trademark)-compatible communication circuit or other short-range communication circuit. For a portable image capturing apparatus employing such a wireless communication circuit, the main power source may be constantly turned on and the power may be constantly supplied to the wireless communication circuit in order to search an access point. Consequently, such a portable image capturing apparatus consumes a relatively large amount of power and often runs out of the battery, which may lead to dysfunction at a good opportunity of capturing an image.

Further, for such a portable image capturing apparatus, when transmitting image data via a wireless communication network, a user of the image capturing apparatus may need to move around to find a location accessible to an access point. While being carried to the location by the user, the image capturing apparatus periodically continues to search an access point, which consumes relatively large power. Thus, under such a limited power-supply condition, a conventional image capturing apparatus may not sufficiently execute transmission of image data.

### SUMMARY

At least one embodiment of the present specification provides an image capturing apparatus including an image capturing unit, a first storage medium, a second storage medium, a first communication circuit, and a second communication circuit. The image capturing unit is configured to capture image data of an object and output the image data. The first storage medium is configured to store the image data. The second storage medium is configured to store a map in which an access point of a network is associated with geographic data. The first communication circuit is configured to communicate with an external device to obtain present location data of the image capturing apparatus. The second communication circuit is configured to transmit the image data via the access point. The present location data is used as a search key to search the map for the access point. The image data stored in the first storage medium is transmitted via the access point thus found.

Additional features and advantages of the present invention will be more fully apparent from the following detailed description of example embodiments, the accompanying drawings and the associated claims.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIG. 1 is a block diagram illustrating a hardware configuration of an image capturing apparatus according to at least one example embodiment of the present invention;
FIG. 2 is a schematic diagram illustrating a locational relationship between access points of a wireless communication network and an image capturing apparatus according to at least one example embodiment of the present invention;
FIG. 3 is a schematic diagram illustrating a data structure of a map stored in a storage medium of an image capturing apparatus according to at least one example embodiment of the present invention;
FIG. 4 is a flow chart illustrating data-transmission determination processing executed by an image capturing apparatus according to at least one example embodiment of the present invention;
FIG. 5 is a flow chart illustrating access-point connection processing executed by an image capturing apparatus according to at least one example embodiment of the present invention;
FIG. 6 is a flow chart illustrating data transmission processing executed by an image capturing apparatus according to at least one example embodiment of the present invention;
FIG. 7 is a schematic diagram illustrating a control circuit of an image-data transmission controller according to at least one example embodiment of the present invention;
FIG. 8 is a schematic diagram illustrating (according to at least one example embodiment of the present invention) a truth table used in the image-data transmission controller of FIG. 7;
FIG. 9 is a schematic diagram illustrating an image capturing system, including an image capturing apparatus, according to at least one example embodiment of the present invention;
FIG. 10 is a schematic diagram illustrating an image capturing system, including an image capturing apparatus, according to another example embodiment of the present invention; and
FIG. 11 is a schematic diagram illustrating a frame to be transmitted from an external device to an image capturing apparatus according to at least one example embodiment of the present invention.

The accompanying drawings are intended to depict example embodiments of the present patent application and should not be interpreted to limit the scope thereof. The accompanying drawings are not to be considered as drawn to scale unless explicitly noted.

### DETAILED DESCRIPTION OF EXAMPLE EMBODIMENTS

Although the terms first, second, etc. may be used herein to describe various elements, components, regions, layers and/or sections, it should be understood that these elements, components, regions, layer and/or sections should not be limited by these terms. These terms are used only to distinguish one element, component, region, layer or section from another region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments illustrated in the drawings, specific terminology is employed for the sake of clarity. However, the disclosure of this invention is not intended to be limited to the specific terminology so selected and it is to be understood that each specific element includes all technical equivalents that operate in a similar manner.

Referring now to the drawings, wherein like reference numerals designate identical or corresponding parts throughout the several views, example embodiments of the present invention are described. However, the present invention is not limited to the example embodiments as illustrated in the drawings.

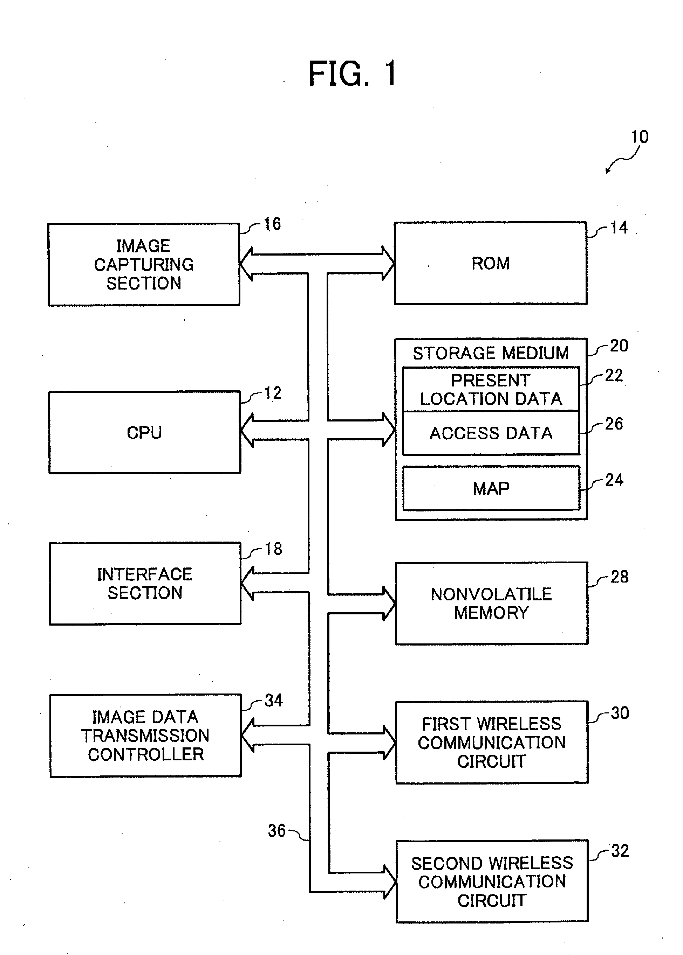

FIG. 1 is a block diagram illustrating a hardware configuration of an image capturing apparatus 10 according to an example embodiment of the present invention.

As illustrated in FIG. 1, the image capturing apparatus 10 may be a portable size apparatus driven by a rechargeable battery or a disposable battery. The image capturing apparatus 10 may include an image capturing section 16, a CPU (central processing unit) 12, and an interface section 18.

The image capturing section 16 also includes a lens driving system, a shutter driving system, a CCD (charge-coupled device), etc. The CPU 12 controls various functions of the image capturing apparatus 10, and executes processing in response to a request from a user. The interface section 18 receives the request from the user and indicates a status or setting of the image capturing apparatus 10 to the user.

The interface section 18 executes processing for outputting an object image as video signals to a LCD (liquid crystal display) panel of the image capturing apparatus 10. The interface section 18 also executes processing for displaying, on the LCD panel, visual images indicating various settings and status of the image capturing apparatus 10.

The interface section 18 further includes a function button, a shutter button, a mode setting dial, etc. The image capturing apparatus 10 receives information input from the user with the function button, the mode setting dial or the like, and instructs the CPU 12 to execute processing in response to a setting of image-capturing condition, a setting of synchronous or asynchronous data transmission mode, and a data transmission instruction.

The image capturing apparatus 10 includes a ROM (read only memory) 14 for storing a control program, setting data, etc. The control program is used to control various processing executed by the image capturing apparatus 10.

When the image capturing apparatus 10 is powered on, the CPU 12 loads the control program from the ROM 14, and executes various functions of the image capturing apparatus 10.

The image capturing apparatus 10 includes a rewritable storage medium 20 such as an SDRAM (synchronous dynamic random access memory) or an SD (secure digital) memory card. According to the present example embodiment, the image capturing apparatus 10 may include both of an SDRAM and a memory card, or at least any one of an SDRAM and a memory.

The storage medium 20 may be a volatile memory or a random access rewritable nonvolatile memory. If a volatile SDRAM may be used as the storage medium 20, the data required for restarting the image capturing apparatus 10 may be transferred into a nonvolatile memory 28 before powering off the image capturing apparatus 10.

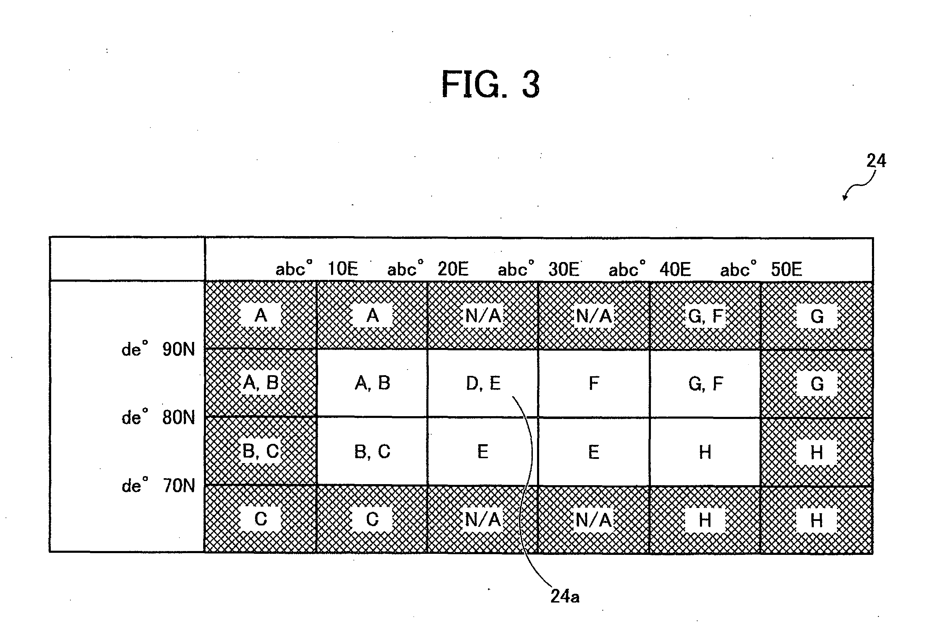

The storage medium 20 stores present location data 22 and a map 24. The present location data 22 indicates an absolute or relative present location of the image capturing apparatus 10. In the map 24, access points of a public wireless network are associated with geographic data, as described later in detail with reference to FIG. 3. The image capturing apparatus 10 uses the map 24 to determine a locational relationship between the image capturing apparatus 10 and the access points.

The storage medium 20 stores access data 26 including setting data and other data used to transmit image data via an access point.

For example, the access data 26 may include an IP (Internet protocol) address of an FTP (file transfer protocol) server or the like, a password, a user ID, etc., which are requested in accordance with a data transmission protocol for use in the image capturing apparatus 10.

For example, when the image capturing apparatus 10 uses an SMTP (simple mail transfer protocol) to transmit image data, the storage medium 20 stores an IP address of a mail server, a user name, a mail account, a password, etc in the access data 26. Such previously obtainable data are registered in binary code so that wireless modulation can be efficiently executed on other access data, such as a frame header, an IP header, and a TCP (transfer control protocol) header.

On receiving the image data, the image capturing apparatus 10 converts the image data into a generally known data format such as JPEG (joint photographic experts group), MJPEG (moving JPEG), JPEG2000, PNG (portable network graphics), GIF (graphics interexchange format), or TIFF (tagged image file format). Then the image capturing apparatus 10 stores the converted image data into the nonvolatile memory 28.

When a user transmits the image data, the image data is converted into an appropriate format, such as a binary code, and is then added to the end of the data, which is registered as the access data 26. The data thus generated is transmitted to an other device or unit from the image capturing apparatus 10 with a file transmission method such as e-mail, FTP, or other electronic file transmission. In this regard, when needed, a plurality of image data can be collectively transmitted as a single transfer packet.

Alternatively, one transfer packet may be generated per image data, and then each transfer packet may be further divided into a plurality of transfer packets for transmission. Such a transmission manner may increase the data transmission amount, but can effectively suppress the effect of packet loss, which may be caused by deterioration in communication condition. Moreover, when transmitting a plurality of image data, the image capturing apparatus 10 can transmit the plurality of image data in an appropriate manner corresponding to the stability and safety in communication condition.

The nonvolatile memory 28 of the image capturing apparatus 10 is a rewritable nonvolatile memory, and is implemented as a flash memory, an EEPROM (electrically erasable programmable read only memory), an EPROM (erasable programmable read only memory) or the like. Examples of data registered in the nonvolatile memory 28 include the setup data of the image capturing apparatus 10, user setting data, etc. The nonvolatile memory 28 supplies such registered data in response to a request from the CPU 12 at the start-up of the image capturing apparatus 10.

The image capturing apparatus 10 further includes a first communication circuit and a second communication circuit. The first communication circuit and the second communication circuit communicate via separate wireless networks, which have different frequency bands and cell sizes. From a viewpoint of portability of the image capturing apparatus 10, the first communication circuit and the second communication circuit are preferably configured as a first wireless communication circuit 30 and a second wireless communication circuit 32, respectively.

The first wireless communication circuit 30 performs transmission and reception of image data in relatively short distance, and operates at relatively low power, compared to the second wireless communication circuit 32. An example of the first wireless communication circuit 30 is a wireless communication circuit operating in accordance with the Bluetooth (registered trademark) standard for communication over a 2.4 GHz band. Alternatively, the first wireless communication circuit 30 may be an infrared data communication circuit.

Further, the image capturing apparatus 10 may include a wireless communication circuit operating in a UWB (ultra wideband) system compliant with IEEE 802.15 TG3a as the first communication circuit.

Moreover, the image capturing apparatus 10 may include a serial communication circuit configured to execute communication via a bus such as USB (universal serial bus) or IEEE 1394 as the first communication circuit instead of the above first wireless communication circuit 30. Alternatively, the image capturing apparatus 10 may include the serial communication circuit together with the first wireless communication circuit 30.

Hereinafter, the case where the image capturing apparatus 10 employs the first wireless communication circuit 30 as the first communication circuit is described in detail. However, the mechanism for starting up the first wireless communication circuit 30 can also be used to start up a USB driver or an IEEE 1394 driver. Thus, the image capturing apparatus 10 is configured so that a user can select a communication manner depending on the user's communication environment.

In the present example embodiment, the second wireless communication circuit 32 serves as the second communication circuit of the image capturing apparatus 10. Preferably, the second wireless communication circuit 32 employs a communication protocol defined by IEEE 802.11a to IEEE 802.11n, IEEE 802.16, or the like. Thus, the second wireless communication circuit 32 performs long-distance, large-cell, high-speed, large-capacity data transmission and reception.

While being capable of transmitting image data at high speed over long distance, the second wireless communication circuit 32 consumes more power and have larger effect on the battery life of the image capturing apparatus 10 than the first wireless communication circuit 30.

Further, the second communication circuit of the image capturing apparatus 10 may be a communication circuit designed for wired and wireless data communication systems to transmit image data from the second communication circuit via a wired network such as a LAN (local area network), a WAN (wide area network), or the Internet.

Hereinafter, for simplicity, the present example embodiment is described with reference to the case where the first communication circuit and the second communication circuit communicate using appropriate wireless communication protocols.

The image capturing apparatus 10 further includes an image data transmission controller 34. The image data transmission controller 34 instructs the second wireless communication circuit 32 to execute transmission and reception of image data.

Specifically, the image data transmission controller 34 controls on and off statuses of the second wireless communication circuit 32 during a period from when an image is captured to when the image is transferred by the second wireless communication circuit 32.

The image data transmission controller 34 also starts up the second wireless communication circuit 32 used for transmitting data, and issues a transmission start command. Further, the image data transmission controller 34 monitors an access-point valid flag and a connection flag, which are stored in the storage medium 20 and the like, and thus controls so that the transmission of image data is efficiently executed in response to the user's instruction.

As illustrated in FIG. 1, the above-described components are connected to each other via an internal bus 36 so as to transmit and receive data relative to each other. Each component may be integrated on a specialized chip, such as ASIC (application specific integrated circuit), to be implemented in the image capturing apparatus 10.

The image capturing apparatus 10 may be carried by a user for some time when the user is looking for an object to be shot. During such time, a power source, such as a disposable or rechargeable battery, supplies power to the image capturing apparatus 10. Thus, the image capturing apparatus 10 may be operable within a limit of power consumption.

In such a mobile environment, the image capturing apparatus 10 is capable of accessing a public network, such as the Internet, via a wireless network. At this time, the image capturing apparatus 10 transmits and receives messages, such as a beacon packet, a probe request/response, etc., to and from an access point. Thus, the image capturing apparatus 10 establishes the connection to the access point, and then transmits image data.

However, if the image capturing apparatus 10 periodically sends a probe request to an access point or stays in a standby mode to receive a beacon packet, the image capturing apparatus 10 may fall short of the battery power when a user wants to capture an object image. Hence, the image capturing apparatus 10 preferably suppresses power consumed to establish a connection to an access point.

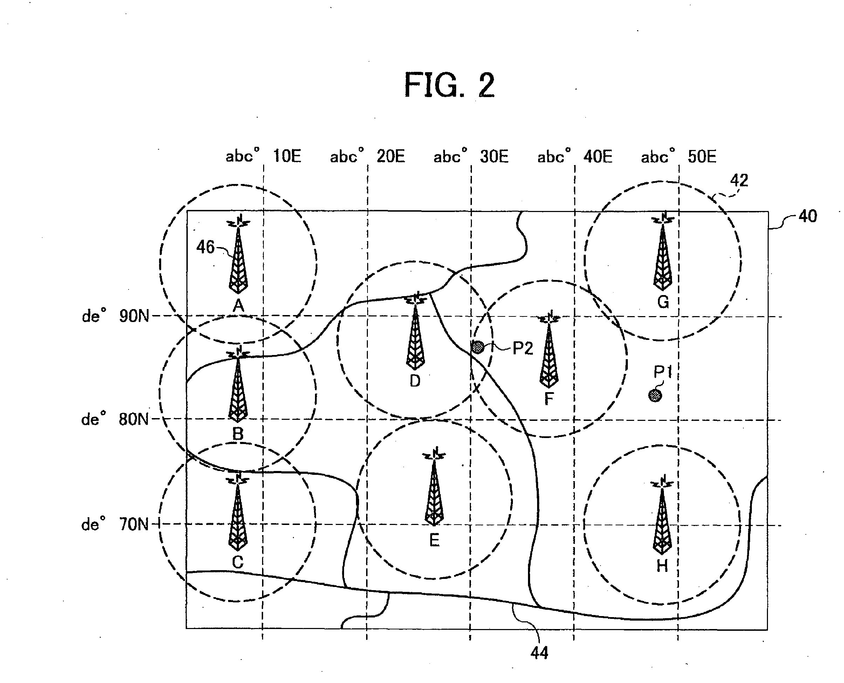

FIG. 2 is a schematic diagram of a locational relationship between the image capturing apparatus 10 and access points of a wireless communication network. FIG. 2 illustrates a plurality of access points 46 located in a region 40 along with administrative boundaries 44. Each access point 46 forms a cell 42 that covers a small area therearound in accordance with a wireless-LAN standard in use. Each access point 46 also establishes a connection to the image capturing apparatus 10, which is found in the corresponding cell 42.

In FIG. 2, for example, when placed at a position P1, the image capturing apparatus 10 is not included in any of the cells 42 of the access points 46, and does not receive a beacon packet from any of the access points 46. Further, even when the image capturing apparatus 10 transmits a probe request, none of the access points 46 receives the probe request.

In such a case, if the image capturing apparatus 10 periodically transmits a beacon packet to an unconnected access point or stays in a standby mode to receive a beacon packet from an unconnected access point, the image capturing apparatus 10 wastes power to be preferably used for capturing an image.

When placed at another position P2, the image capturing apparatus 10 is simultaneously included in two difference cells 42 of the access points 46D and 46F. At this time, the image capturing apparatus 10 can establish a connection to one of the access points 46D and 46F, which has first established a handshake session with the image capturing apparatus 10.

In the present example embodiment, the image capturing apparatus 10 determines whether or not the image capturing apparatus 10 is found in any of the cells 42 of the access points 46 by comparing the present location data of the image capturing apparatus 10, which is provided from an external device, with geographical location data of each access point 46. At this time, the image capturing apparatus 10 performs such a determination by using a map 24, rather than by performing transmission/reception of messages, such as a probe request/response or a beacon packet.

FIG. 3 illustrates a data structure of a map 24 stored in the storage medium 20 of the image capturing apparatus 10 according to the present example embodiment.

When a user has a destination in mind before leaving, the user can obtain a map 24 relevant to the destination via a public network, and store the map 24 into the image capturing apparatus 10. Specifically, for example, a user may use a personal computer to download the map 24 relevant to the destination via the Internet or other public network. Then the user can store the map 24 through a bus interface such as USB or IEEE 1394 into the storage medium 20 of the image capturing apparatus 10.

Alternatively, a user may obtain a relevant map 24 on the spot using the second wireless communication circuit 32, and store the map 24 into the storage medium 20 of the image capturing apparatus 10.

Further, in the present example embodiment, a user can download the map 24 into a cellular phone or PDA (personal digital assistant) or other mobile communication device. Then, using the first wireless communication circuit 30, the user can transmit the map 24 to the image capturing apparatus 10 via short-range communication.

The map 24 illustrated in FIG. 3 has multiple fields each indicating an geographic area, which is defined by latitude and longitude data. When an geographic area includes an access point 46, an identification code indicating the access point 46 is entried into a corresponding field.

In FIG. 3, a field 24a indicates an area ranging from "abc" degrees and 20 minutes east longitude to "abc" degrees and 30 minutes east longitude and ranging from "de" degrees 80 minutes north latitude and "de" degrees 90 minutes north latitude. The map 24 indicates that the geographic area, indicated by the field 24a, includes two access points 46 having identification codes D and E.

In the present example embodiment, the area size covered by the field 24a is set to be smaller than the area size covered by the cell 42. Thereby, as long as the access point 46 is found in the field 24a of the map 24, the image capturing apparatus 10 can securely access to the access point 46 thus found.

The present location data of the image capturing apparatus 10 may be obtained from a cellular phone, a global positioning system (GPS), or other satellite positioning system (SPS). For example, when transmitting image data from the image capturing apparatus 10, the image capturing apparatus 10 may use the first wireless communication circuit 30 to obtain the present location data thereof from a device such as a vehicle-mounted GPS receiver, a mobile GPS receiver, or a cellular phone. Then, the image capturing apparatus 10 stores the present location data thereof into the storage medium 20.

In particular, when using a cellular phone, the present location data of the image capturing apparatus 10 can also be used as data indicating a location of a base station, to which the cellular phone is accessible at the time.

Further, the image capturing apparatus 10 may include a border-area determination section. The border-area determination section determines whether or not the image capturing apparatus 10 is found in a border-area field, represented by hatching in FIG. 3, of the map 24 stored therein at the time. The border-area determination section performs such a determination by comparing the present location data of the image capturing apparatus 10 with the map 24.

The border-area determination section is provided as a module of control programs stored in the ROM 14. The CPU 12 loads the control programs and thereby the image capturing apparatus 10 implements the border-area determination section as one of the function sections.

When the border-area determination section determines that the present location data of the image capturing apparatus 10 is included in a border-area field of the map 24, the image capturing apparatus 10 starts up the second wireless communication circuit 32 to execute data transmission and obtains another map 24 regarding a neighboring or adjacent region.

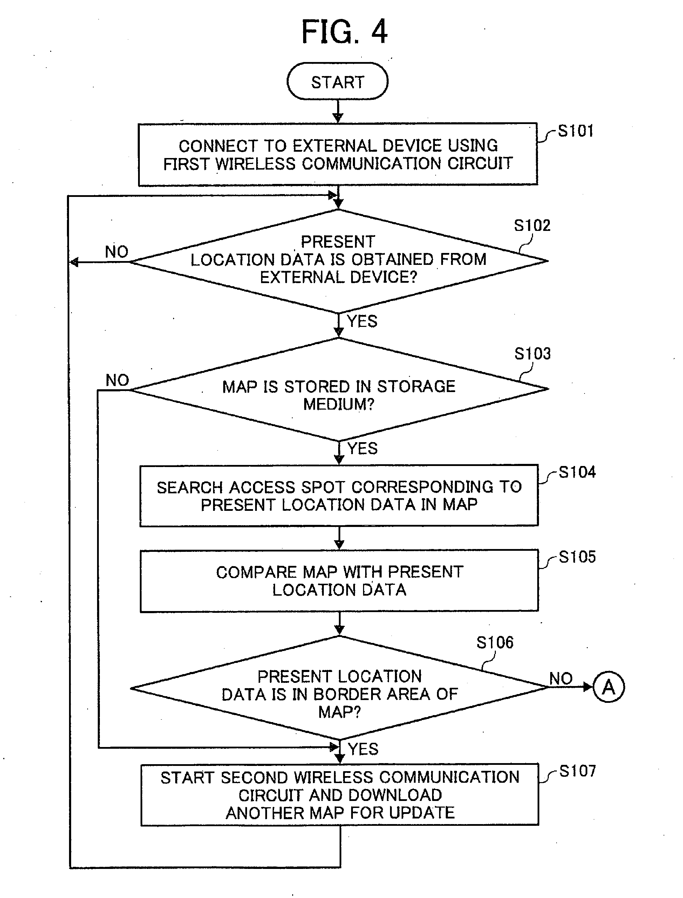

FIG. 4 schematically illustrate a flow chart of data-transmission determination processing according to an example embodiment of the present invention.

In FIG. 4, when powered on, the image capturing apparatus 10 starts the data-transmission determination processing.

At S101, the image capturing apparatus 10 starts up the first wireless communication circuit 30 to communicate with an external device.

At S102, the image capturing apparatus 10 determines whether or not the present location data thereof, including longitude and latitude information, is successfully obtained from the external device. If the image capturing apparatus 10 determines that the present location data is not obtained ("NO" at S102), the data obtaining processing of S102 is repeated until the data is successfully obtained.

On the other hand, if the image capturing apparatus 10 determines that the data is successfully obtained ("YES" at S102), the processing goes to S103.

At S103, the image capturing apparatus 10 determines whether or not a map 24 corresponding to the present location data is stored in the storage medium 20. If the image capturing apparatus 10 determines that the relevant map 24 is not stored in the storage medium 20 ("NO" at S103), the processing goes to S107.

At S107, the image capturing apparatus 10 starts up the second wireless communication circuit 32 to download another map 24 corresponding to the present location data obtained from the external device and update map information.

Alternatively, if the image capturing apparatus 10 determines that the relevant map 24 is stored in the storage medium 20 ("YES" at S103), the processing goes to S104.

At S104, the image capturing apparatus 10 searches an access point entry in the field, which corresponds to the present location data, of the map 24.

At S105, based on the search result of S104, the image capturing apparatus 10 compares the field corresponding to the present location data with each field indicating a border area of the map 24.

At S106, if the image capturing apparatus 10 determines that the present location data is included in the field indicating the border area ("YES" at S106), the processing goes to S107.

At S107, the image capturing apparatus 10 compulsorily starts up the second wireless communication circuit 32 to execute transmit data transmission. Thus, the image capturing apparatus 10 obtains another corresponding map 24 and update map information.

Then the image capturing apparatus 10 sets the second wireless communication circuit 32 to OFF, and ends the processing.

In this regard, if the relevant map 24 is not stored in the storage medium 20 ("NO" at S103), the image capturing apparatus 10 may send a probe request or stay in a standby mode to receive a beacon packet when downloading another map 24.

Further, another map 24 may be downloaded and stored into a storage medium, such as an SD (secured digital) memory card, mounted on a cellular phone or other device. Then the map 24 can be transmitted to the image capturing apparatus 10 via infrared communication or by inserting the storage medium into a card slot of the image capturing apparatus 10.

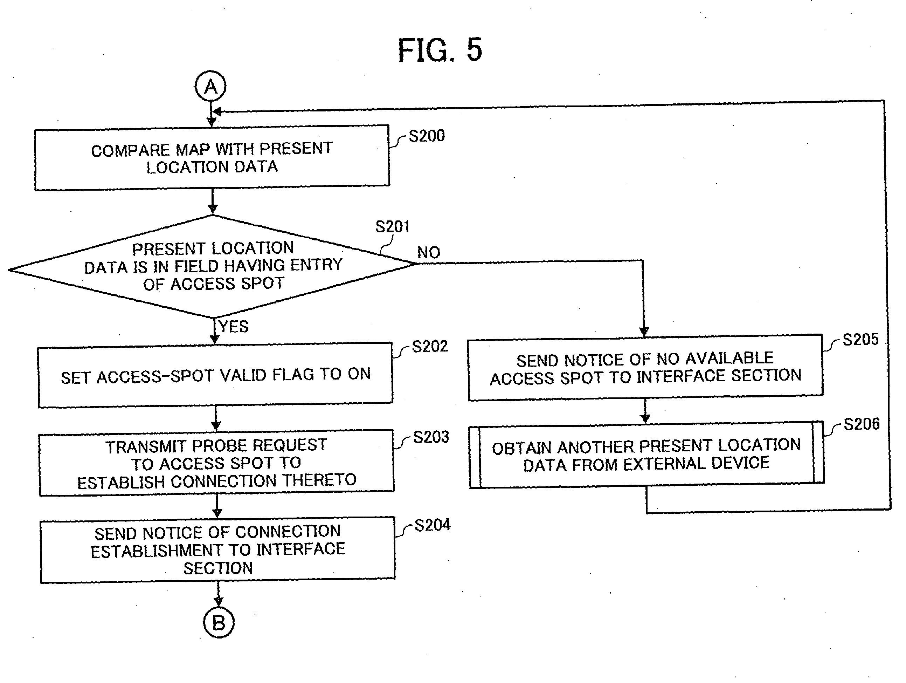

If the image capturing apparatus 10 determines that the present location data is not included in any field indicating the border area of the map 24 ("NO" at S106), the processing goes to S200 in FIG. 5.

FIG. 5 schematically illustrates a flow chart of access-point connection processing according to an example embodiment of the present invention.

At S200, the image capturing apparatus 10 starts the access-point connection processing by comparing the present location data with the map 24.
At S201, the image capturing apparatus 10 determines whether or not the present location data is included in a field having entry of access points.

If the image capturing apparatus 10 determines that the present location data is included in a field in which an access point is entried ("YES" at S201), at S202, the image capturing apparatus 10 sets the access-point valid flag to ON.

At S203, the image capturing apparatus 10 starts up the second wireless communication circuit 32. The second wireless communication circuit 32 transmits a probe request to the valid access point. Thus, the image capturing apparatus 10 establishes a connection to the access point.

At S204, the image capturing apparatus 10 sends to the interface section 18 a notice of the establishment of connection to the access point. The image capturing apparatus 10 also sets a connection flag to ON, which indicates that the connection with the access point is established.

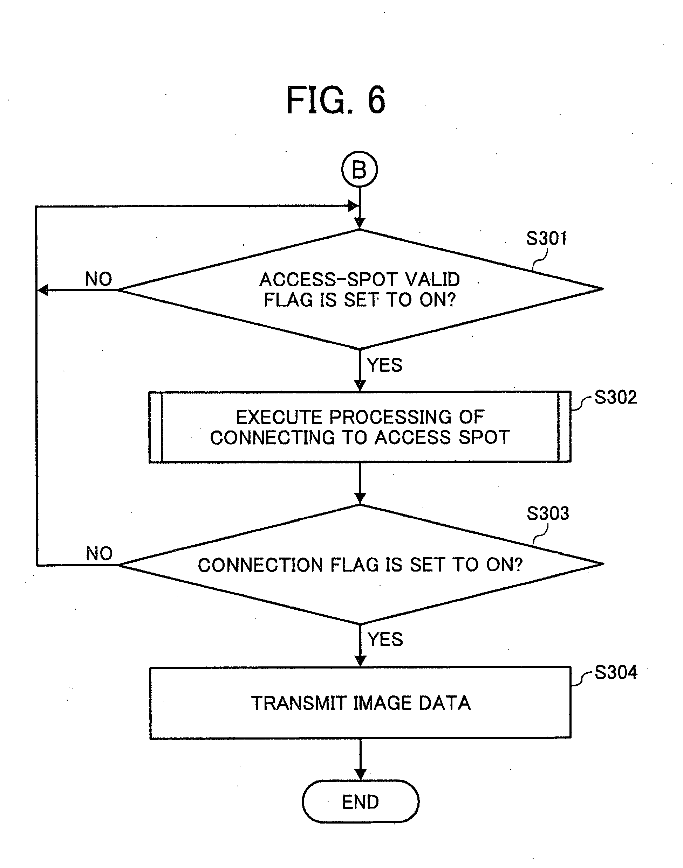

Then the processing goes to S301 for data transmission processing, as illustrated in FIG. 6, of the image data obtained by the image capturing apparatus 10.

On the other hand, at S201, if the present location data is not included in any field having entry of access points ("NO" at S201), the processing goes to S205.

At S205, the image capturing apparatus 10 sends to the interface section 18 a notice that no access point is available.

At S206, the image capturing apparatus 10 obtains the present location data thereof from the external device again. Then the processing returns to S200 and then the processing of S201, S205, and S206 are repeated.

In the present example embodiment, when the present location data is found in a field having an entry of access point, the image capturing apparatus 10 determines that data transmission is executable, and then starts up the second wireless communication circuit 32, which consumes a relatively large amount of power. Thus, since the image capturing apparatus 10 does not continuously keep the second wireless communication circuit 32 in the standby mode, the image capturing apparatus 10 can efficiently use the power source and enhance a life of the power source.

FIG. 6 schematically illustrates a flow chart of data transmission processing according to an example embodiment of the present invention. As described above, the data transmission processing may be executed after step S204 illustrated in FIG. 5.

In the present example embodiment, for the transmission of image data obtained by the image capturing apparatus 10, the image capturing apparatus 10 is capable of selecting synchronous transmission or asynchronous transmission through the mode setting dial, etc. The image capturing apparatus 10 also generates a data transmission command in response to a user's instruction executed by pressing a shutter button, a data transmission button, or the like.

In the present example embodiment, a user uses the mode setting dial to select a data transmission mode from a synchronous transmission mode and an asynchronous transmission mode including a background transmission mode.

When a data transmission command is generated for image data, the image data is registered into a job queue having, for example, an FIFO (first in, first out) structure until the data transmission processing of the image data is completed. Such a job queue is formed in the storage medium 20 or the nonvolatile memory 28.

The image capturing apparatus 10 also starts the data transmission processing in accordance with an transmission start command. The transmission start command is generated by the image data transmission controller 34, separately from the data transmission command generated by a user's instruction executed by pressing a data transmission button, etc. After the access-point valid flag and the connection flag are set to ON, the transmission start command is sent to the CPU 12.

When the CPU 12 receives the data transmission command, the CPU 12 loads the access data 26. Then the CPU 12 finds the identification code of image data registered in the job queue, and loads the relevant image data from the storage medium 20 or the nonvolatile memory 28.

The CPU 12 also executes appropriate conversion processing on the image data, and adds the converted image data to the end of the access data to generate a transfer packet. The CPU 12 sends the transfer packet to the second wireless communication circuit 32, and further sends the packet to the valid access point in accordance with an appropriate communication protocol.

In the present example embodiment, the image data transmission controller 34 is continuously driven with the first wireless communication circuit 30 when the main power source being ON or when a background transmission mode activating communication function but not activating other functions. Thus, the image capturing apparatus 10 searches an access point and monitors statuses of the access-point valid flag and the connection flag while effectively suppressing power consumption.

In the data transmission processing as illustrated in FIG. 6, at S301, the image capturing apparatus 10 determines whether or not the access-point valid flag is set to ON. If the image capturing apparatus 10 determines that the valid flag is not set to ON ("NO" at S301), the image capturing apparatus 10 repeats the determination processing of S301 until the valid flag is set to ON.

If the image capturing apparatus 10 determines that the valid flag is set to ON ("YES" at S301), the processing goes to S302.

At S302, the image capturing apparatus 10 executes the access-point connection processing as illustrated in FIG. 5.

At S303, the image capturing apparatus 10 determines whether or not the connection flag is set to ON. If the image capturing apparatus 10 determines that the connection flag is set to ON ("YES" at S303), the processing goes to S304.

At S304, the image capturing apparatus 10 issues the transmission start command, and starts up the second wireless communication circuit 32 to transmit the image data.

Thus, the image capturing apparatus 10 causes the second wireless communication circuit 32 to transmit the image data to the access point, and ends the data transmission processing.

Alternatively, at S303, if the image capturing apparatus 10 determines that the connection flag is not set to ON ("NO" at S303), the processing returns to S301.

The image capturing apparatus 10 repeats the above processing steps until the data transmission processing of image data registered in the job queue is completed.

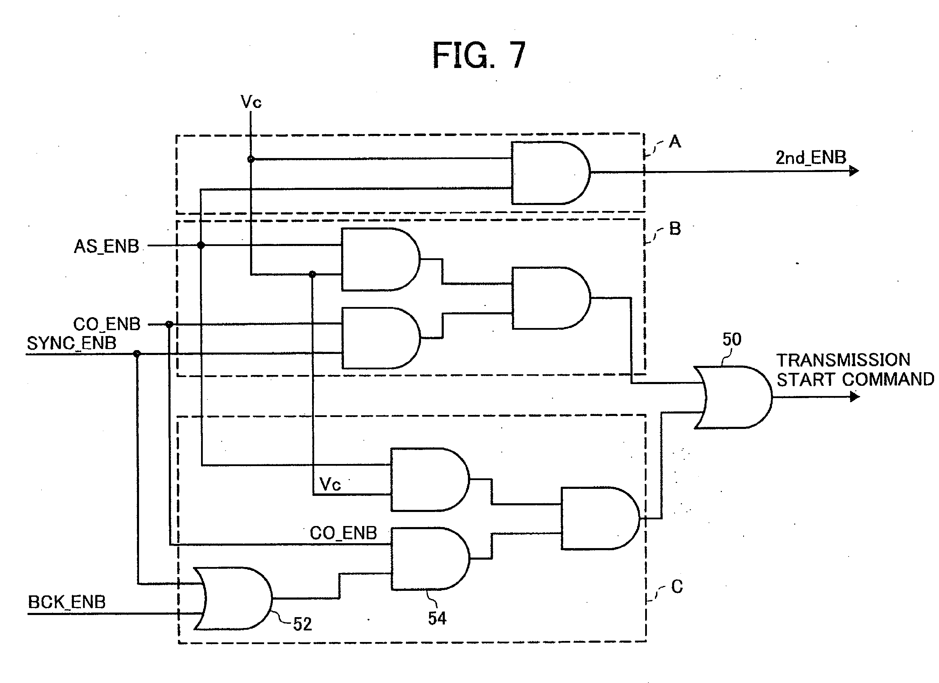

FIG. 7 schematically illustrates a control circuit of the image-data transmission controller 34 according to an example embodiment of the present invention.

In FIG. 7, a signal AS_ENB is data indicating the status of the access-point valid flag. Specifically, when asserted, the signal AS_ENB indicates that the access-point valid flag is set to ON.

A signal CO_ENB is data for indicating a status of the connection flag. Specifically, when asserted, the data signal CO_ENB indicates that the connection flag is set to ON.

A signal SYNC_ENB is data for instructing synchronous transmission, which is selectable by a user via the mode setting dial, etc. The signal SYNC_ENB indicates whether or not a user has input a data transmission command by pressing a shutter button or a data transmission button.

In the case of synchronous transmission, on receiving the data transmission command, the image data transmission controller 34 asserts the signal SYNC_ENB and executes processing of generating the transmission start command. The signal SYNC_ENB is latched until the signal SYNC_ENB is reset by the issue of the transmission start command. Then the signal SYNC_ENB is used for the background transmission of executing asynchronous transmission.

A signal BCK_ENB is asserted when a user selects asynchronous transmission with the mode setting dial or other button. For the asynchronous transmission, the image data obtained by the image capturing apparatus 10 is stored in the nonvolatile memory 28 until the image capturing apparatus 10 determines that the data transmission is possible. On determining that the data transmission is possible, the image capturing apparatus 10 transmits the image data.

For the asynchronous transmission, each time the image capturing apparatus 10 obtains image data to be transmitted, the image capturing apparatus 10 stores the image data into the nonvolatile memory 28, and simultaneously registers the identification code of the image data into a job queue. On determining that the data transmission is possible, the image capturing apparatus 10 causes the second wireless communication circuit 32 to execute the data transmission of the image data.

The image capturing apparatus 10 includes a background transmission mode as a mode of asynchronous transmission as described above.

In the background transmission mode, the image capturing apparatus 10 asynchronously executes data transmission with the supply of power being off to functions other than communication function.

Specifically, regarding the timing of data transmission, the asynchronous transmission mode and the background transmission mode are identical that data transmission is automatically executed at the point when the image capturing apparatus 10 determines that the data transmission is possible.

In the background transmission mode, functions other than communication functions are inactivated, by which a power consumption of the image capturing apparatus 10 can be reduced.

In this regard, a signal BCK_ENB is used for instructing asynchronous transmission in the background transmission mode or other asynchronous transmission mode. Similar to the signal SYNC_ENB, the signal BCK_ENB is latched until the background transmission mode or other asynchronous transmission mode is canceled or is reset by the issue of transmission start command. Thus, the image-data transmission controller 34 controls the start of image data transmission.

A signal 2nd_ENB is used to start up the second wireless communication circuit 32. A signal Vc indicates that the image capturing apparatus 10 receives power from a backup power source provided in the image capturing apparatus 10.

For the control circuit illustrated in FIG. 7, a block A is a circuit block configured to instruct the start-up of the second wireless communication circuit 32. When the access-point valid flag is set to ON, the block A is asserted to instruct the second wireless communication circuit 32 to start the connection protocol.

A block B is a circuit block configured to issue the transmission start command in the synchronous transmission mode. When a user selects the synchronous transmission mode, the block B issues a transmission start command in synchronization with a data transmission request of the user.

Specifically, when a user requests data transmission, the transmission start command of an OR gate 50 is asserted. At this time, if the second wireless communication circuit 32 is ready to communicate with an access point, the transmission of the image data is executed. On the other hand, if the second wireless communication circuit 32 is not ready to communicate with an access point, the transmission start command of the OR gate 50 is not issued, and is stored in the nonvolatile memory 28 until the background transmission is automatically started.

A block C is a circuit block used when a user does not select the synchronous transmission and allows the image capturing apparatus 10 to execute the background transmission. In FIG. 7, when a user does not select the background transmission, the signal SYNC_ENB is not asserted and remains low. On the other hand, the signal SYNC_ENB and the signal BCK_ENB are input to the OR gate 50.

When the user selects the background transmission mode, a signal AS_ENB and a signal BCK_ENB in the block C are both asserted, which indicate that the access-point valid flag and the connection flag are set to ON. Then, if any one of the signal SYNC_ENB and the signal BCK_ENB is asserted, the output signal of the transmission start command of the OR gate 50 is asserted to HIGH. Thus, the transmission of image data is started.

At this time, an AND gate 54 includes the signal SYNC_ENB, which has been input via the OR gate 52 in the preceding data transmission. Then the block C issues the transmission start command when the synchronous transmission requested by a user ends up in failure, or when the background transmission is selected by a user.

When the transmission start command is issued, the signal SYNC_ENB, which is latched until then, is reset.

The signal BCK_ENB, indicating the user's instruction of the asynchronous transmission or the background transmission, may be kept asserted even after the transmission start command is issued unless the selection of the asynchronous transmission or the background transmission is canceled by the user.

In response to the transmission start command, the image capturing apparatus 10 loads the image data corresponding to the identification code, registered in the job queue, from the nonvolatile memory 28 in a FIFO or other manner. Then the image capturing apparatus 10 executes the transmission of the image data. After the transmission of all image data registered in the job queue is completed, the signal BCK_ENB may be reset.

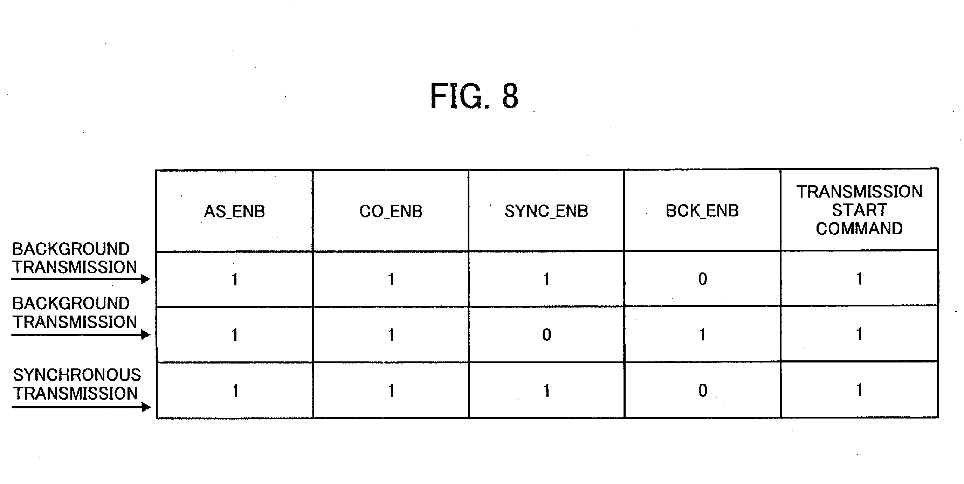

FIG. 8 is an example of a truth table for use in the image-data transmission controller 34 of FIG. 7.

In FIG. 8, four conditions having both signals AS_ENB and CO_E becomes zero are omitted from the truth table for simplicity. If both signals AS_ENB and CO_E becomes zero, the image capturing apparatus 10 may be in a location not accessible to an access point 46, or may not be connected to any access points. In such four conditions, the transmission start signal is not asserted regardless of the statuses of signals SYNC_ENB and BCK_ENB.

For the asynchronous transmission, if the signal SYNC_ENB or the signal BCK_ENB is asserted and both of the signal AS_ENB and CO_ENB are asserted, the transmission start command is issued.

For the background transmission mode, when the signal BCK_ENB is asserted, the supply of power is stopped for functions except communication function.

As illustrated in FIG. 8, the control circuit of FIG. 7 is used when a user selects the background transmission. Alternatively, the control circuit is used to execute a previously failed synchronous transmission again.

Thus, the image capturing apparatus 10 is capable of starting up the second wireless communication circuit 32 on demand to execute synchronous or asynchronous transmission of image data in response to a user's request. The image capturing apparatus 10 is also capable of effectively executing such a transmission of image data while saving power consumption.

In the present example embodiment, the image capturing apparatus 10 determines the content of an ACK message indicating whether or not data transmission has been successfully executed. On receiving the ACK message indicating the success of data transmission, the image capturing apparatus 10 deletes the image data stored in the nonvolatile memory 28. Thus, the image capturing apparatus 10 can effectively secure and manage the storage capacity of storage medium while securely storing image data.

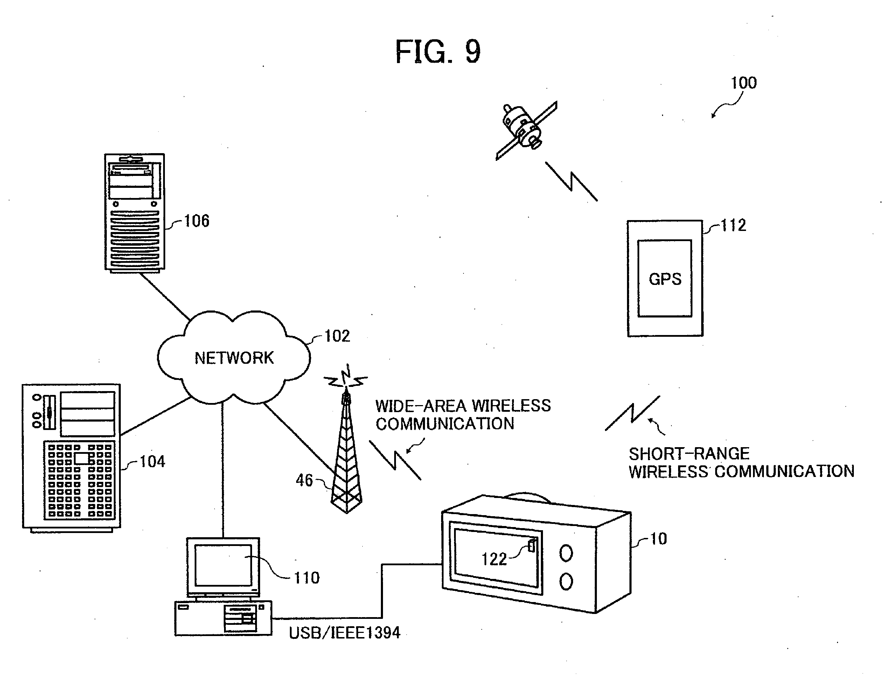

FIG. 9 schematically illustrates an image capturing system 100 including an image capturing apparatus 10 according to an example embodiment of the present invention.

As illustrated in FIG. 9, the image capturing system 100 includes a public network 102, an image storage server 104, and an image capturing apparatus 10. The public network 102 may be a public telephone network, ISDN (integrated services digital network), the Internet, etc. The image storage server 104 is connected to the public network 102.

The image storage server 104 may be a mail server or an FTP server, which is owned and maintained by a service provider. The image storage server 104 may further be an FTP server, which is owned and maintained by a user.

Further, a map server 106, owned and maintained by a wireless communication service provider or a map company, is connected to the public network 102.

When a user carries the image capturing apparatus 10 to a destination where a target object is obtained, the user can access the map server 106 using a personal computer 110 in advance, download a map relevant to the destination, and store the map into the image capturing apparatus 10 via a bus interface such as USB or IEEE 1394.

Alternatively, at a destination, a user can obtain the present location data of the image capturing apparatus 10 via a vehicle-mounted GPS receiver 112 serving as an external device. The external device may be a portable GPS receiver or other SPS receiver.

On transmitting image data captured by the image capturing apparatus 10, the user can instruct the image capturing apparatus 10 to obtain the present location data of the image capturing apparatus 10. At this time, the image capturing apparatus 10 obtains the present location data using the first wireless communication circuit 30 in accordance with a short-range wireless communication protocol.

The first wireless communication circuit 30 is preferably compatible with a Bluetooth (registered trademark) or other short-range wireless communication protocol. Thereby, the first wireless communication circuit 30 can operate with less power consumption. Examples of such a short-range wireless communication protocol include IEEE 802.15.

Alternatively, in another example embodiment, the first wireless communication circuit 30 may be an infrared communication circuit.

As illustrated in FIG. 9, when the access-point valid flag and the connection flag are set to ON, the interface unit 18 causes the LCD panel of the image capturing apparatus 10 to display an indicator 122 for indicating a status where data transmission is possible.

For example, when a user selects the synchronous transmission mode, the user can recognize the status by the indicator 122, and execute the synchronous transmission of image data to the image storage server 104 by pressing the data transmission button.

Alternatively, when a user selects the background transmission mode or other asynchronous transmission mode, the user can capture an object image and store the image into the nonvolatile memory 28 without any consideration on ON/OFF of the indicator 122. At this time, the image capturing apparatus 10 does not need to start up the second wireless communication circuit 32.

The user selects the background transmission mode by pressing the data transmission button, which asserts the signal SYNC_ENB, or operating the mode setting dial, which asserts the signal BCK_ENB. Then, when the data transmission becomes possible, the image capturing apparatus 10 automatically starts processing of transmitting the image data. When finishing the transmission processing, the image capturing apparatus 10 turns the second wireless communication circuit 32 off.

On transmitting image data, the image capturing apparatus 10 starts up the second wireless communication circuit 32 using a wide-range wireless communication protocol. The second wireless communication circuit 32 may use a so-called wireless MAN (metropolitan area network) or other wireless network in accordance with such a wide-range wireless communication protocol as defined by IEEE 802.11 or IEEE 802.16. The second wireless communication circuit 32 may also use such a wireless network as long as the protocol can provide a relatively large cell compared to the short-range wireless communication protocol.

In the present example embodiment, the image capturing apparatus 10 starts up the second wireless communication circuit 32 only when executing the data transmission. The image capturing apparatus 10 can also execute background transmission of image data with functions except communication function being off. Thus, for the connection to a wide-range wireless communication network, the image capturing apparatus 10 can save power consumption.

In the present example embodiment, when a user selects the synchronous transmission mode, the image capturing apparatus 10 may fail to establish a connection to an access point 46 due to unstable communication condition or the like. In such a case, if the user selects the background transmission mode, the image capturing apparatus 10 transmits the image data, which is stored therein, with the background processing. Thus, the image capturing apparatus 10 can efficiently transmit image data.

Furthermore, for the background transmission, the image capturing apparatus 10 stops the supply of power to functions except communication function. In the background communication mode, the image capturing apparatus 10 starts up the first wireless communication circuit 30 to continuously obtain the present location data of the image capturing apparatus 10. Based on the obtained result, the image capturing apparatus 10 starts up the second wireless communication circuit 32 to execute the background transmission of image data to the image storage server 104.

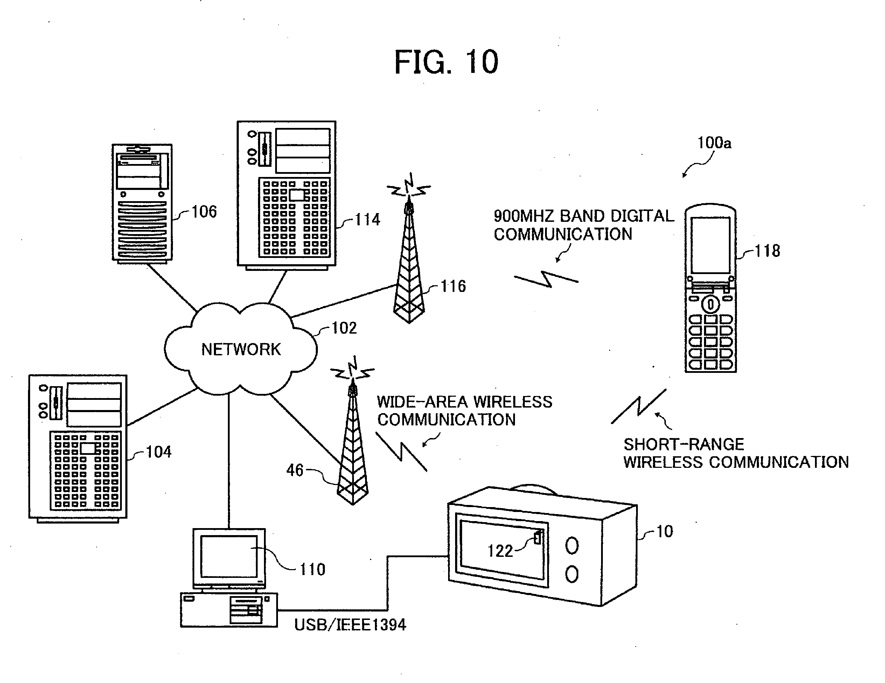

FIG. 10 schematically illustrates an image capturing system 100a according to another example embodiment of the present invention.

In FIG. 10, the image capturing apparatus 10 obtains the present location data thereof from a cellular phone 118, which is used as an external device, using a Bluetooth (registered trademark) communication technology or an infrared communication technology. In the present example embodiment, the cellular phone 118 is used as the external device. However, the external device may be other portable communication device, such as PDA.

The cellular phone 118 performs 900 MHz band digital wireless communication with a base station 116. The cellular phone 118 also accesses a network such as a public telephone network, ISDN, the Internet, etc. via a carrier server 114, owned and managed by a cellular phone carrier, etc.

In the present example embodiment, when the cellular phone 118 supports an appropriate long-distance communication protocol, a user can download a map from the map server 106 to the cellular phone 118. Then the user can transmit the map from the cellular phone 118 to the image capturing apparatus 10 using short-range wireless communication.

Similar to the image capturing system 100 illustrated in FIG. 9, the image capturing apparatus 10 in the image capturing system 100a also uses the present location data, obtained from the cellular phone 118, to search the map, and sets the access-point valid flag and a connection flag. When capturing image data, the image capturing apparatus 10 executes synchronous or asynchronous transmission of the image data to the image storage server 104 in response to a user's request.

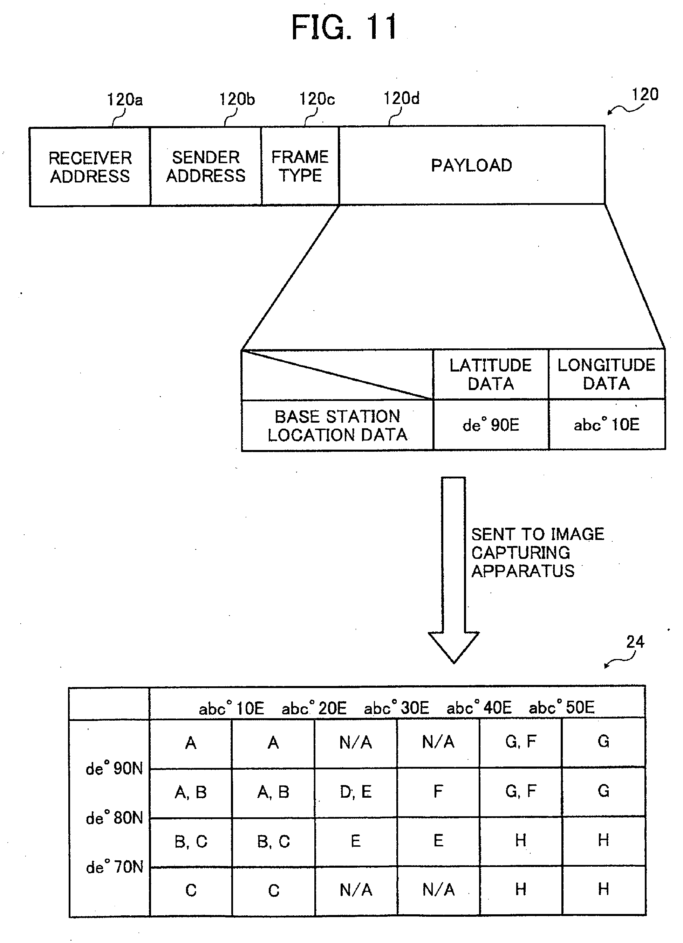

FIG. 11 schematically illustrates an example of a data frame 120 transmitted from the cellular phone 118 to the image capturing apparatus 10.

As illustrated in FIG. 11, the data frame 120 includes a receiver address 120a, a sender address 120b, a frame type 120c, and payload 120d, for example.

The receiver address 120a indicates address information of the image capturing apparatus 10, while the sender address 120b indicates address information of the cellular phone 118.

The frame type 120c indicates a type of the data frame 120, and the payload 120d includes the present location data of the image capturing apparatus 10.

In the payload 120d, the location data of a base station 116, to which the cellular phone 118 is currently accessible, is described as latitude and longitude data. When the data frame 120 is sent to the image capturing apparatus 10, the image capturing apparatus 10 uses the location data of the base station 116 to search the map 24.

When the cellular phone 118 is used as the external device, the image capturing system 100a may use a map having a different form from the map 24 as illustrated in FIG. 3 or FIG. 11. The map may be formed so that base stations of the cellular phone 118 are associated with access points of the image capturing apparatus 10, which are located near the base stations.

Embodiments of the present patent application may be conveniently implemented using a conventional general purpose digital computer programmed according to the teachings of the present specification, as will be apparent to those skilled in the computer art. Appropriate software coding can readily be prepared by skilled programmers based on the teachings of the present disclosure, as will be apparent to those skilled in the software art. Embodiments of the present patent application may also be implemented by the preparation of application specific integrated circuits or by interconnecting an appropriate network of conventional component circuits, as will be readily apparent to those skilled in the art.

Numerous additional modifications and variations are possible in light of the above teachings. It is therefore to be understood that, within the scope of the appended claims, the disclosure of this patent specification may be practiced otherwise than as specifically described herein.

Further, elements and/or features of different example embodiments may be combined with each other and/or substituted for each other within the scope of the appended claims.

Still further, any one of the above-described and other example features of the present patent specification may be embodied in the form of an apparatus, method, system, computer program and computer program product. For example, the aforementioned methods may be embodied in the form of a system or device, including, but not limited to, any of the structure for performing the methodology illustrated in the drawings.

Even further, any of the aforementioned methods may be embodied in the form of a program. The program may be stored on a computer readable medium and is adapted to perform any one of the aforementioned methods when run on a computer device (a device including a processor). Thus, the storage medium or computer readable medium, is adapted to store information and is adapted to interact with a data processing facility or computer device to perform the method of any of the above mentioned embodiments.

The storage medium may be a built-in medium installed inside a computer device main body or a removable medium arranged so that it can be separated from the computer device main body. Examples of the built-in medium include, but are not limited to, rewriteable non-volatile memories, such as ROMs and flash memories, and hard disks. Examples of the removable medium include, but are not limited to, optical storage media such as CD-ROMs and DVDs; magneto-optical storage media, such as MOs; magnetic storage media, including but not limited to floppy disks (trademark), cassette tapes, and removable hard disks; media with a built-in rewriteable non-volatile memory, including but not limited to memory cards; and media with a built-in ROM, including but not limited to ROM cassettes, etc. Furthermore, various information regarding stored images, for example, property information, may be stored in any other form, or provided in other ways.

The present patent application is based upon Japanese patent applications, No. JP2006-172251 filed on June 22, 2006; and No. JP2007-148110 filed on June 4, 2007 in the Japan Patent Office.

The invention can be described by the examples listed below:
1. An image capturing apparatus, comprising:
   an image capturing unit to capture image data of an object and output the image data;
   a first storage medium to store the image data;
   a second storage medium to store a map in which an access point of a network is associated with geographic data;
   a first communication circuit to communicate with an external device to obtain present location data of the image capturing apparatus; and
   a second communication circuit to transmit the image data via the access point,
   the present location data being usable to search the map stored in the second storage medium for the access point, and the image data stored in the first storage medium then being transmittable via the access point .
2. The image capturing apparatus according to example 1, wherein the external device is a satellite positioning system.
3. The image capturing apparatus according to example 1, wherein the external device is a cellular handset.
4. The image capturing apparatus according to any one of examples 1 to 3, wherein the first communication circuit is usable to obtain the map.
5. The image capturing apparatus according to any one of examples 1 to 4, further comprising:
   an image data transmission controller to start up the second communication circuit to transmit the image data based on settings of a first flag and a second flag,
   the first flag indicating, based on a search result for the access point, whether or not the second communication circuit is accessible to the access point, and the second flag indicating whether or not a connection between the second communication circuit and the access point is established.
6. The image capturing apparatus according to example 5, further comprising:
   an interface unit to cause the second communication circuit to transmit the image data asynchronously to the capturing operation of the image data,
   wherein the image data transmission controller includes a control circuit to detec the settings of the first flag and the second flag and to start up the second communication circuit in response to a setting of any one of synchronous communication and asynchronous communication, input by a user via the interface unit.
7. The image capturing apparatus according to any one of examples 1 to 6, further comprising:
   a determination section to determine, based on a search result for the access point, whether or not the present location data is located in a border area of the map, and, if the present data is located in the border area, start up the second wireless communication circuit to obtain another map.
8. An image capturing system comprising:
   the image capturing apparatus according to any one of examples 1 to 7;
   an external device to provide present location data of the image capturing apparatus to the image capturing apparatus via short-range wireless communication; and
   an access point to receive image data from the image capturing apparatus via wide-range wireless communication capable of handling a relatively large cell size compared to the short-range wireless communication, and to execute rooting in the network.
9. A method of transmitting an image captured by an image capturing apparatus, comprising:
   storing image data of an object captured by an image capturing unit in a storage medium;
   obtaining present location data of the image capturing apparatus via a first communication circuit;
   searching an access point in a map, the access point being associated with geographic data, using the present location data ; and
   transmitting the image data, stored in the storage medium, using a second wireless communication circuit via the access point .
10. The method according to example 9, further comprising:
   obtaining the present location data of the image capturing apparatus from a satellite positioning system receiver via the first communication circuit using a communication protocol capable of handling a relatively small cell size compared to a communication protocol of the second wireless communication circuit.
11. The method according to example 9, further comprising:
   obtaining the present location data of the image capturing apparatus from a cellular handset via the first communication circuit using a communication protocol capable of handling a relatively small cell size compared to a communication protocol of the second wireless communication circuit.
12. The method according to any one of examples 9 to 11, further comprising:
   transmitting the image data via the second wireless communication circuit using a communication protocol capable of handling a relatively large cell size compared to a communication circuit of the first wireless communication circuit.
13. The method according to any one of examples 9 to 12,
   wherein the transmitting further includes
   determining a status of a first flag indicating, based on a search result for the access point, whether or not the second communication circuit is accessible to the access point, and a status of a second flag indicating whether or not a connection between the second communication circuit and the access point is established,
   starting up the second communication circuit, when the first flag is set to on, to connect with the access spot, and to set the second flag to on, and
   issuing an instruction to start transmitting the image data in response to a setting operation of synchronous communication or asynchronous communication.
14. The method according to any one of examples 9 to 13, further comprising:
   starting up the second communication circuit to obtain another map when a search result for the access spot indicates that the present location data of the image forming apparatus is located in a border area of the map.
15. A storage medium for use in an image capturing apparatus, storing a program usable to cause the image capturing apparatus to execute the method according to any one of examples 9 to 14.
16. A computer readable medium including program segments for, when executed on the image capturing apparatus, causing the image capturing apparatus to implement the method according to any one of examples 9 to 14.
17. The image capturing apparatus according to any one of examples 1 to 7, wherein the present location data is used as a search key to search the map for the access point.
18. The method according to any one of examples 9 to 14, wherein the present location data is used as a search key to search the map for the access point.
19. An image capturing apparatus, comprising:
   means for storing image data of an object captured by an image capturing unit;
   means for obtaining present location data of the image capturing apparatus;
   means for searching for an access point in a map, the access point being associated with geographic data, using the present location data; and
   means for transmitting the image data, stored in the means for storing, via the access point.
20. The image capturing apparatus according to example 19, wherein the present location data is used as a search key to search the map for the access point.
   According to one embodiment of the present invention, the image capturing apparatus is a digital camera. According to an other embodiment of the present invention, the image capturing apparatus is a cellular phone comprising a digital camera.
   According to example embodiments of the present invention, a short-range wireless communication is a communication over a distance form 0,2 m to 50 m or from 0,2 m to 70 m.
   According to example embodiments of the present invention, a wide-range wireless communication is a communication over a distance from 30 m to 100 m, or from 2 km to 3 km or from 2 km, 3 km or 4 km to 50 km.
   Preferably, a cell size which is handled using a predetermined communication protocol is defined by a radius of the cell. A first cell size may be termed relatively small compared to a second cell size if the ratio of the radius of the first cell to the radius of the second cell is in the range of 0.1 to 0.001 or 0.1 to 0.01 or 0.1 to 0.5. A first cell size may be termed relatively large compared to a second cell size if the ratio of the radius of the fist cell to the radius of the second cell is in the range of 10 to 1000 or 10 to 100 or 2 to 10.

## Claims

1. An image capturing apparatus (10), comprising:
an image capture section (16);
means (28) for storing image data of an object captured by an image capturing section (16);
means (20) for storing a map (24) of access points;
means for obtaining present location data (22) of the image capturing apparatus (10);
means for searching for an access point (46) in the map (24), the access point (46) being associated with location data, using the present location data (22); and
means (32) for transmitting the image data, stored in the means for storing, via the access point (46).

2. The image capturing apparatus (10) according to claim 1, wherein the present location data (22) is used as a search key to search the map (24) for the access point (46).

3. The image capturing apparatus (10) according to claim 1 or 2, comprising:
an image capturing section (16) to capture image data of an object and output the image data;
a first storage medium (28) adapted for storing the image data;
a second storage medium (20) adapted for storing a map (24) in which an access point (46) of a network is associated with geographic data;
a first wireless communication circuit (30) adapted for communicating with an external device (118, 112) to obtain present location data (22) of the image capturing apparatus (10); and
a second wireless communication circuit (32) adapted for transmitting the image data via the access point (46),
the present location data (22) being usable to search the map (24) stored in the second storage medium (20) for the access point (46), and the image data stored in the first storage medium (28) then being transmittable via the access point (46).

4. The image capturing apparatus according to claim 3, wherein the external device is a satellite positioning system (112).

5. The image capturing apparatus according to claim 3, wherein the external device is a cellular handset (118).

6. The image capturing apparatus according to any one of claims 3 to 5, wherein the first wireless communication circuit (36) is usable to obtain the map (24).

7. The image capturing apparatus according to any one of claims 3 to 6, further comprising:
an image data transmission controller (34) adapted for starting up the second wireless communication circuit (32) to transmit the image data based on settings of a first flag and a second flag,
the first flag indicating, based on a search result for the access point (46), whether or not the second wireless circuit is accessible to the access point (46), and the second flag indicating whether or not a connection between the second wireless communication circuit (32) and the access point (46) is established.

8. The image capturing apparatus according to claim7, further comprising:
an interface section (18)adapted for causing the second communication circuit (32) to transmit the image data asynchronously to the capturing operation of the image data,
wherein the image data transmission controller (34) includes a control circuit to detect the settings of the first flag and the second flag and to start up the second wireless communication circuit (32) in response to a setting of any one of synchronous communication and asynchronous communication, input by a user via the interface section (18).

9. The image capturing apparatus according to any one of claims 3 to 8, further comprising:
a determination section to determine, based on a search result for the access point (46), whether or not the present location data is located in a border area of the map (24), and, if the present data is located in the border area, start up the second wireless communication circuit to obtain another map.

10. The image capturing apparatus according to any one of claims 3 to 9, wherein the present location data (22) is used as a search key to search the map (24) for the access point (46).

11. An image capturing system comprising:
the image capturing apparatus according to any one of claims 3 to 10;
an external device (112, 118) adapted for providing present location data (22) of the image capturing apparatus (10) to the image capturing apparatus (10) via short-range wireless communication; and
an access point (46) adapted for receiving image data from the image capturing apparatus (10) via wide-range wireless communication capable of handling a relatively large cell size compared to the short-range wireless communication, and for executing rooting in the network.

12. A method of transmitting an image captured by an image capturing apparatus, comprising:
storing image data of an object captured by an image capturing section (16) in a storage medium (28);
obtaining present location data (22) of the image capturing apparatus (10) via a first wireless communication circuit (30);
searching an access point (46) in a map (24), the access point (46) being associated with geographic data, using the present location data (22) ; and
transmitting the image data, stored in the storage medium (28), using a second wireless communication circuit (32) via the access point (46).

13. The method according to claim 12, further comprising:
obtaining the present location data (22) of the image capturing apparatus (10) from a satellite positioning system (112) receiver via the first wireless communication circuit (30) using a communication protocol capable of handling a relatively small cell size compared to a communication protocol of the second wireless communication circuit (32).

14. The method according to claim 12, further comprising:
obtaining the present location data (22) of the image capturing apparatus (10) from a cellular handset (118) via the first wireless communication circuit (30) using a communication protocol capable of handling a relatively small cell size compared to a communication protocol of the second wireless communication circuit (32).

15. The method according to any one of claims 12 to 14, further comprising:
transmitting the image data via the second wireless communication circuit (32) using a communication protocol capable of handling a relatively large cell size compared to a communication protocol of the first wireless communication circuit (30).

16. The method according to any one of claims 12 to 15,
wherein the transmitting further includes
determining a status of a first flag indicating, based on a search result for the access point (46), whether or not the second wireless communication circuit (32) is accessible to the access point (46), and a status of a second flag indicating whether or not a connection between the second wireless communication circuit (32) and the access point (46) is established,
starting up the second wireless communication circuit (32), when the first flag is set to on, to connect with the access point (46), and to set the second flag to on, and
issuing an instruction to start transmitting the image data in response to a setting operation of synchronous communication or asynchronous communication.

17. The method according to any one of claims 12 to 16, further comprising:
starting up the second wireless communication circuit (32) to obtain another map (24) when a search result for the access point (46) indicates that the present location data (22) of the image forming apparatus is located in a border area of the map (24).

18. The method according to any one of claims 12 to 16, wherein the present location data (22) is used as a search key to search the map (24) for the access point (46).

19. A storage medium, storing a program code which is adapted to cause an image capturing apparatus (10) to execute the method according to any one of claims 12 to 18.

20. A computer readable medium including program segments adapted to cause an image capturing apparatus (10) to execute the method according to any one of claims 12 to 18.

## Patentansprüche

1. Bilderfassungsvorrichtung (10), enthaltend: einen Bilderfassungsabschnitt (16);
Mittel (28) zum Speichern von Bilddaten eines von einem Bilderfassungsabschnitt (16) erfassten Gegenstands; Mittel (20) zum Speichern eines Plans (24) von Zugangspunkten;
Mittel zum Erhalten gegenwärtiger Ortsdaten (22) der Bilderfassungsvorrichtung (10);
Mittel zum Suchen eines Zugangspunkts (46) in dem Plan (24), indem die gegenwärtigen Ortsdaten (22) genutzt werden, wobei der Zugangspunkt (46) mit Ortsdaten verknüpft ist; und
Mittel (32) zum Übertragen der Bilddaten, die in dem Mittel zum Speichern gespeichert sind, über den Zugangspunkt (46).

2. Bilderfassungsvorrichtung (10) gemäß Anspruch 1, bei der die gegenwärtigen Ortsdaten (22) als Suchschlüssel zum Durchsuchen des Plans (24) nah dem Zugangspunkt (46) verwendet werden.

3. Bilderfassungsvorrichtung (10) gemäß Anspruch 1 oder 2, enthaltend:
einen Bilderfassungsabschnitt (16) zum Erfassen von Bilddaten eines Gegenstands und Ausgeben der Bilddaten;
ein erstes Speichermedium (28), das zum Speichern der Bilddaten angepasst ist;
ein zweites Speichermedium (20), das zum Speichern eines Plans (24) angepasst ist, in dem ein Zugangspunkt (46) eines Netzwerks mit geographischen Daten verknüpft ist;
einen ersten Drahtloskommunikationsschaltkreis (30), der zum Kommunizieren mit einem externen Gerät (118, 112) angepasst ist, um gegenwärtige Ortsdaten (22) der Bilderfassungsvorrichtung (10) zu erhalten; und
einen zweiten Drahtloskommunikationsschaltkreis (32), der zum Übertragen der Bilddaten über den Zugangspunkt (46) eingerichtet ist,
wobei die gegenwärtigen Ortsdaten (22) nutzbar sind, um den in dem zweiten Speichermedium (20) gespeicherten Plan (24) nach dem Zugangspunkt (46) zu durchsuchen, und wobei die in dem ersten Speichermedium (28) gespeicherten Bilddaten (28) dann über den Zugangspunkt (46) übertragbar sind.

4. Bilderfassungsvorrichtung gemäß Anspruch 3, bei der das externe Gerät ein Satellitenpositionierungssystem (112) ist.

5. Bilderfassungsvorrichtung gemäß Anspruch 3, bei der das externe Gerät ein zelluläres Handgerät (118) ist.

6. Bilderfassungsvorrichtung gemäß irgendeinem der Ansprüche 3 bis 5, bei dem der erste Drahtloskommunikationsschaltkreis (36) nutzbar ist, um den Plan (24) zu erhalten.

7. Bilderfassungsvorrichtung gemäß irgendeinem der Ansprüche 3 bis 6, ferner enthaltend:
eine Bilddatenübertragungssteuereinrichtung (34), die angepasst ist, den zweiten Drahtlosübertragungsschaltkreis (32) anzufahren, um die Bilddaten basierend auf dem Setzen eines ersten Flags und eines zweiten Flags zu übertragen,
wobei das erste Flag basierend auf einem Suchergebnis für den Zugangspunkt (46) anzeigt, ob der zweite Drahtlosschaltkreis für den Zugangspunkt (46) zugänglich ist oder nicht, und das zweite Flag anzeigt, ob eine Verbindung zwischen dem zweiten Drahtloskommunikationsschaltkreis (32) und dem Zugangspunkt (46) hergestellt ist oder nicht.

8. Bilderfassungsvorrichtung gemäß Anspruch 7, ferner enthaltend:
einen Schnittstellenabschnitt (18), der angepasst ist, den zweiten Kommunikationsschaltkreis (32) zu veranlassen, die Bilddaten asynchron zum Erfassungsvorgang für die Bilddaten zu übertragen,
wobei die Bilddatenübertragungssteuereinrichtung (34) einen Steuerschaltkreis beinhaltet, um das Setzen des ersten Flags und des zweiten Flags zu detektieren und den zweiten Drahtloskommunikationsschaltkreis (32) in Antwort auf ein Einstellen irgendeines von synchroner Kommunikation und asynchroner Kommunikation, das von einem Benutzer über den Schnittstellenabschnitt (18) eingegeben wird, anzufahren.

9. Bilderfassungsvorrichtung gemäß irgendeinem der Ansprüche 3 bis 8, ferner enthaltend:
einen Bestimmungsabschnitt zum auf einem Suchergebnis für den Zugangspunkt (46) basierenden Bestimmen, ob die gegenwärtigen Ortsdaten in einem Grenzgebiet des Plans (24) liegen oder nicht und, wenn die gegenwärtigen Daten in dem Grenzgebiet liegen, den zweiten Drahtloskommunikationsabschnitt anzufahren, um einen anderen Plan zu erhalten.

10. Bilderfassungsvorrichtung gemäß irgendeinem der Ansprüche 3 bis 9, bei der die gegenwärtigen Ortsdaten (22) als Suchschlüssel zum Durchsuchen des Plans (24) nach dem Zugangspunkt (46) verwendet werden.

11. Bilderfassungssystem, enthaltend:
eine Bilderfassungsvorrichtung gemäß irgendeinem der Ansprüche 3 bis 10;
ein externes Gerät (112, 118), das zum Bereitstellen gegenwärtiger Ortsdaten (22) der Bilderfassungsvorrichtung (10) für die Bilderfassungsvorrichtung (10) über kurzreichweitige Drahtloskommunikation angepasst ist; und
einen Zugangspunkt (46), der zum Erhalten von Bilddaten von der Bilderfassungsvorrichtung (10) über weitreichende Drahtloskommunikation, die fähig ist, eine relativ groß Zellengröße im Vergleich zu der kurzreichweitigen Drahtloskommunikation verarbeiten kann, und zum Ausführen von Wurzeln in den Netzwerk angepasst ist.

12. Verfahren zum Übertragen eines von einer Bilderfassungsvorrichtung erfassten Bilds, enthaltend:
Speichern von Bilddaten eins von einem Bilderfassungsabschnitt (16) erfassten Gegenstands in einem Speichermedium (28);
Erhalten gegenwärtiger Ortsdaten (22) der Bilderfassungsvorrichtung (10) über einen ersten Drahtloskommunikationsschaltkreis (30);
Suchen eines Zugangspunkts (46) auf einem Plan (24), indem die gegenwärtigen Ortsdaten (22) verwendet werden, wobei der Zugangspunkt (46) mit geographischen Daten verknüpft ist; und
Übertragen der Bilddaten über den Zugangspunkt (46), die in dem Speichermedium (28) gespeichert sind, indem ein zweiter Drahtloskommunikationsschaltkreis (32) verwendet wird.

13. Verfahren gemäß Anspruch 12, ferner enthaltend:
Erhalten der gegenwärtigen Ortsdaten (22) der Bilderfassungsvorrichtung (10) von einem Satellitenpositionierungssystemempfänger (112) über den ersten Drahtloskommunikationsschaltkreis (30), indem ein Kommunikationsprotokoll verwendet wird, das fähig ist, eine relativ kleine Zellengröße verglichen mit einem Kommunikationsprotokoll des zweiten Drahtloskommunikationsschaltkreises (32) zu verarbeiten.

14. Verfahren gemäß Anspruch 12, ferner enthaltend:
Erhalten der gegenwärtigen Ortsdaten (22) der Bilderfassungsvorrichtung (10) von einem zellulären Handgerät über den ersten Drahtloskommunikationsschaltkreis (30), indem ein Kommunikationsprotokoll verwendet wird, das fähig ist, eine relativ kleine Zellengröße verglichen mit einem Kommunikationsprotokoll des zweiten Drahtloskommunikationsschaltkreises (30) zu verarbeiten.

15. Verfahren gemäß irgendeinem der Ansprüche 12 bis 14, ferner enthaltend:
Übertragen der Bilddaten über den zweiten
Drahtloskommunikationsschaltkreis (32), indem ein Kommunikationsprotokoll verwendet wird, das fähig ist, eine relativ kleine Zellengröße verglichen mit einem Kommunikationsprotokoll des ersten Drahtloskommunikationsschaltkreises (30) zu verarbeiten.

16. Verfahren gemäß irgendeinem der Ansprüche 12 bis 15,
bei dem das Übertragen ferner beinhaltet
Bestimmen eines Status eines ersten Flags, das basierend auf einem Suchergebnis für den Zugangspunkt (46) anzeigt, ob der zweite Drahtloskommunikationsschaltkreis (32) für den Zugangspunkt (46) zugänglich ist oder nicht, und eines Status eines zweiten Flags, das anzeigt, ob eine Verbindung zwischen dem zweiten Drahtloskommunikationsschaltkreis (32) und dem Zugangspunkt (46) hergestellt ist oder nicht,
Anfahren des zweiten Drahtloskommunikationsschaltkreises (32), wenn das erste Flag auf an gesetzt ist, um ihn mit dem Zugangspunkt (46) zu verbinden und das zweite Flag auf an zu setzen, und
Ausgeben einer Anweisung in Antwort auf einen Einstellvorgang synchroner Kommunikation oder asynchroner Kommunikation, mit der Übertragung der Bilddaten zu beginnen.

17. Verfahren gemäß irgendeinem der Ansprüche 12 bis 16, ferner enthaltend:
Anfahren des zweiten Drahtloskommunikationsschaltkreises (32), um einen anderen Plan (24) zu erhalten, wenn ein Suchergebnis für den Zugangspunkt (46) anzeigt, dass die gegenwärtigen Ortsdaten (22) der Bilderzeugungsvorrichtung in einem Grenzgebiet des Plans (24) liegen.

18. Verfahren gemäß irgendeinem der Ansprüche 12 bis 16, bei dem die gegenwärtigen Ortsdaten (22) als Suchschlüssel zum Durchsuchen des Plans (24) nach dem Zugangspunkt (46) verwendet werde

19. Speichermedium, das einen Programmcode speichert, der angepasst ist, eine Bilderfassungsvorrichtung (10) zu veranlassen, das Verfahren gemäß irgendeinem der Ansprüche 12 bis 18 auszuführen.

20. Computerlesbares Medium, das Programmsegmente beinhaltet, die angepasst sind, eine Bilderfassungsvorrichtung (10) das Verfahren gemäß irgendeinem der Ansprüche 12 bis 18 auszuführen.

## Revendications

1. Dispositif de prise d'image (10) comprenant :
une section de prise d'image (16) ;
un moyen (28) pour enregistrer des données de l'image d'un objet prise par la section de prise d'image (16) ;
d'accès ; un moyen (20) pour enregistrer une carte (24) de points d'accès ;
un moyen pour obtenir des données d'emplacement présent (22) du dispositif de prise d'image (10) ;
un moyen pour rechercher un point d'accès (46) sur la carte (24), le point d'accès (46) étant associé à des données d'emplacement, en utilisant les données d'emplacement présent (22) ; et
un moyen (32) pour transmettre les données d'image, enregistrées dans le moyen d'enregistrement, par l'intermédiaire du point d'accès (46).

2. Dispositif de prise d'image (10) selon la revendication 1, dans lequel les données d'emplacement présent (22) sont utilisées comme clé de recherche pour rechercher le point d'accès (46) sur la carte (24).

3. Dispositif de prise d'image (10) selon la revendication 1 ou 2, comprenant :
une section de prise d'image (16) pour prendre des données d'image d'un objet et fournir en sortie les données d'image ;
un premier support d'enregistrement (28) adapté à enregistrer les données d'image ;
un second support d'enregistrement (20) adapté à enregistrer une carte (24) sur laquelle un point d'accès (46) d'un réseau est associé à des données géographiques ;
un premier circuit de communication sans fil (30) adapté à communiquer avec un dispositif extérieur (118, 112) pour obtenir des données d'emplacement présent (22) du dispositif de prise d'image (10) ; et
un second circuit de communication sans fil (32) adapté à transmettre les données d'image par l'intermédiaire du point d'accès (46),
les données d'emplacement présent (22) étant utilisables pour rechercher le point d'accès (46) sur la carte (24) enregistrées sur le second support d'enregistrement (20) et les données d'image enregistrées sur le premier support d'enregistrement (28) pouvant alors être transmises par l'intermédiaire du point d'accès (46).

4. Dispositif de prise d'image selon la revendication 3, dans lequel le dispositif extérieur est un système de positionnement par satellite (112).

5. Dispositif de prise d'image selon la revendication 3, dans lequel le dispositif extérieur est un combiné téléphonique cellulaire (118).

6. Dispositif de prise d'image selon l'une quelconque des revendications 3 à 5, dans lequel le premier circuit de communication sans fil (36) est utilisable pour obtenir la carte (24).

7. Dispositif de prise d'image selon l'une quelconque des revendications 3 à 6, comprenant en outre :
un contrôleur de transmission de données d'image (34) adapté à démarrer le second circuit de communication sans fil (32) pour transmettre les données d'image en se basant sur les positions d'un premier indicateur et d'un second indicateur,
le premier indicateur indiquant, en se basant sur un résultat de recherche du point d'accès (46), si le second circuit sans fil est ou non accessible au points d'accès (46), et le second indicateur indiquant si une connexion entre le second circuit de communication sans fil (32) et le point d'accès (46) est ou non établie.

8. Dispositif de prise d'image selon la revendication 7, comprenant en outre :
une section d'interface (18) adaptée à faire transmettre par le second circuit de communication (32) les données d'image de manière asynchrone vers l'opération de prise des données d'image,
dans lequel le contrôleur de transmission de données d'image (34) comporte un circuit de contrôle pour détecter les positions du premier indicateur et du second indicateur et pour démarrer le second circuit de communication sans fil (32) en réponse à un réglage d'une communication quelconque parmi une communication synchrone et une communication asynchrone, fourni en entrée par un utilisateur par l'intermédiaire de la section d'interface (18).

9. Dispositif de prise d'image selon l'une quelconque des revendications 3 à 8, comprenant en outre :
une section de détermination pour déterminer, en se basant sur le résultat de recherche du point d'accès (46) si les données d'emplacement présent sont ou non situées dans une zone limite de la carte (24) et, si les données présentes sont situées dans la zone limite, démarrer le second circuit de communication sans fil pour obtenir une autre carte.

10. Dispositif de prise d'image selon l'une quelconque des revendications 3 à 9, dans lequel les données d'emplacement présent (22) sont utilisées comme clé de recherche pour rechercher le point d'accès (46) sur la carte (24).

11. Système de prise d'image comprenant :
le dispositif de prise d'image selon l'une quelconque des revendications 3 à 10 ;
un dispositif extérieur (112, 118) adapté à fournir des données d'emplacement présent (22) du dispositif de prise d'image (10) au dispositif de prise d'image (10) par l'intermédiaire d'une communication sans fil à courte portée ; et
un point d'accès (46) adapté à recevoir des données d'image provenant du dispositif de prise d'image (10) par l'intermédiaire d'une communication sans fil à longue portée capable de gérer une cellule de taille relativement grande par rapport à la communication sans fil à courte portée et pour exécuter un enracinement dans le réseau.

12. Procédé de transmission d'une image prise par un dispositif de prise d'image, comprenant :
l'enregistrement sur un support d'enregistrement (28) de données de l'image d'un objet prise par une section de prise d'image (16) ;
l'obtention de données d'emplacement présent (22) du dispositif de prise d'image (10) par l'intermédiaire d'un premier circuit de communication sans fil (30) ;
la recherche d'un point d'accès (46) sur une carte (24), le point d'accès (46) étant associé à des données géographiques, en utilisant les données d'emplacement présent (22) ; et
la transmission des données d'image, enregistrées sur le support d'enregistrement, par l'intermédiaire du point d'accès (46), en utilisant un second circuit de communication sans fil (32).

13. Procédé selon la revendication 12, comprenant en outre :
l'obtention des données d'emplacement présent (22) du dispositif de prise d'image (10) à partir d'un récepteur d'un système de positionnement par satellite (112) par l'intermédiaire du premier circuit de communication sans fil (30) en utilisant un protocole de communication capable de gérer une cellule de taille relativement petite par rapport à un protocole de communication du second circuit de communication sans fil (32).

14. Procédé selon la revendication 12, comprenant en outre :
l'obtention des données d'emplacement présent (22) du dispositif de prise d'image (10) à partir d'un combiné téléphonique cellulaire (118) par l'intermédiaire du premier circuit de communication sans fil (30) en utilisant un protocole de communication capable de gérer une cellule de taille relativement petite par rapport à un protocole de communication du second circuit de communication sans fil (32).

15. Procédé selon l'une quelconque des revendications 12 à 14, comprenant en outre :
la transmission des données d'image par l'intermédiaire du second circuit de communication sans fil (32) en utilisant un protocole de communication capable de gérer une cellule de taille relativement grande par rapport à un protocole de communication du premier circuit de communication sans fil (30).

16. Procédé selon l'une quelconque des revendications 12 à 15, dans lequel l'émission comporte en outre
la détermination de l'état d'un premier indicateur, indiquant, en se basant sur un résultat de recherche du point d'accès (46) si le second circuit de communication sans fil (32) est ou non accessible au point d'accès (46) et de l'état d'un second indicateur indiquant si une connexion entre le second circuit de communication sans fil (32) et le point d'accès (46) est ou non établie,
le démarrage du second circuit de communication sans fil (32) lorsque le premier indicateur est positionné, pour connexion avec le point d'accès (46) et pour positionner le second indicateur, et
la fourniture d'une instruction pour démarrer la transmission des données d'image en réponse à une opération de réglage de communication synchrone ou de communication asynchrone.

17. Procédé selon l'une quelconque des revendications 12 à 16, comprenant en outre :
le démarrage du second circuit de communication sans fil (32) pour obtenir une autre carte (24) lorsque le résultat de recherche du point d'accès (46) indique que les données d'emplacement présent (22) du dispositif de formation d'image sont situées dans une zone limite de la carte (24).

18. Procédé selon l'une quelconque des revendications 12 à 16, dans lequel les données d'emplacement présent (22) sont utilisées comme clé de recherche pour rechercher le point d'accès (46) sur la carte (24).

19. Support d'enregistrement, contenant un code de programme qui est adapté à faire exécuter par un dispositif de prise d'image (10) le procédé selon l'une quelconque des revendications 12 à 18.

20. Support lisible par un ordinateur incluant des segments de programme adaptés à faire exécuter par un dispositif de prise d'image (10) le procédé selon l'une quelconque des revendications 12 à 18.
